## Europäisches Patentamt

## European Patent Office

## Office européen des brevets

(11) Veröffentlichungsnummer: **0 166 184**
**B1**

(12) # EUROPÄISCHE PATENTSCHRIFT

(45) Veröffentlichungstag der Patentschrift:
16.09.87

(51) Int. Cl.⁴: **B 44 C 1/175**, C 04 B 41/81

(21) Anmeldenummer: 85106142.4

(22) Anmeldetag: 18.05.85

(54) Verfahren zum Dekorieren von Tonwaren mit Dekorbildern.

(30) Priorität: 25.05.84 DE 3419564

(43) Veröffentlichungstag der Anmeldung:
02.01.86 Patentblatt 86/1

(45) Bekanntmachung des Hinweises auf die Patenterteilung:
16.09.87 Patentblatt 87/38

(84) Benannte Vertragsstaaten:
AT BE CH FR GB IT LI LU NL SE

(56) Entgegenhaltungen:
FR - A - 2 008 036
FR - A - 2 448 552
GB - A - 720 778
US - A - 3 715 371

CHEMICAL ABSTRACTS, Band 84, Nr. 8, 23. Februar 1976, Seite 355, Nr. 49230y, Columbus, Ohio, US
CHEMICAL ABSTRACTS, Band 94, Nr. 18, Mai 1981, Seite 297, Nr. 144257c, Columbus, Ohio, US
CHEMICAL ABSTRACTS, Band 92, Nr. 10, 10. März 1980, Seite 312, Nr. 81299d, Columbus, Ohio, US

(73) Patentinhaber: DEPRO Keramische Buntdrucke GmbH, Industriegelände Hannweiler,
D-6601 Kleinbilttersdorf 2 (DE)

(72) Erfinder: Küppers, Gerhard, Dipl.-Ing., Rotenbühler Weg 72, D-6600 Saarbrücken (DE)
Erfinder: Lehming, Günter, Fasanenweg 6,
D-6601 Bübingen (DE)
Erfinder: Frangenberg, Alexander, Dipl.-Ing.,
Schemmstrasse 17, D-4410 Warendorf 2 (DE)

(74) Vertreter: Kempe, Wolfgang, Dr., Postfach 1273,
D-6800 Mannheim 1 (DE)

## Beschreibung

Die Erfindung bezieht sich auf ein Verfahren zum Dekorieren von Tonwaren mit Dekorbildern nach dem Oberbegriff des Patentanspruches 1.

Unter der Sammelbezeichnung «Tonwaren» versteht man keramische Erzeugnisse mit einem porösen bzw. nicht porösen Scherben, der grössere Mengen Tonerde enthält, also beispielsweise Vitro-Porzellan, Bone China, Steingut, Steinzeug oder Hartporzellan. Aufgrund des Tonerdegehaltes können die rohen Tonwarenerzeugnisse im unverglühten Zustand grosse Mengen Wasser aufnehmen, wobei sie stark quellen. Diese grosse Wasserempfindlichkeit des Tonscherbens verbietet es, Dekorbilder, die von dem Trägerpapier mit Wasser abgelöst worden sind, auf der unverglühten, rohen bzw. grünen Ware zu applizieren. Will man trotzdem eine Unterglasur-Dekoration mit in Wasser abgelösten Dekorbildern auf der Tonware erhalten, so muss man den grünen Scherben vorher brennen, d.h. einen Glüh- oder Biskuitbrand durchführen. Auf den so geglühten Biskuit kann man dann ohne Gefahr das nasse Dekorbild auflegen, das bei den bekannten Verfahren zur Eliminierung der organischen Bestandteile bei 750 bis 800°C vorgebrannt wird. Danach erfolgt das Glasieren und der Glattbrand.

Der Zwang zum mehrmaligen Brennen der zu dekorierenden Tonwaren verteuert das Endprodukt wesentlich, da der Brennvorgang nicht nur erhebliche maschinelle Aufwendungen erfordert, sondern auch Fabrikationsraum für die Brennöfen und kostbare Herstellungszeit für den Brennprozess selbst. Der Tonwarenerzeugnisse verarbeitenden Industrie war es deshalb seit langem ein Anliegen, durch Änderung des Dekorationsverfahrens mindestens einen Brennvorgang einzusparen.

Der vorliegenden Erfindung liegt deshalb die Aufgabe zugrunde, das Verfahren der eingangs beschriebenen Art so zu verbessern, dass die Dekoration unmittelbar auf der rohen bzw. grünen Ware durchgeführt werden kann und anschliessend Glüh- bzw. Biskuitbrand und Dekorationsbrand in einem Arbeitsgang durchgeführt werden können.

Diese Aufgabe wird erfindungsgemäss durch die kennzeichnenden Merkmale des Patentanspruches 1 gelöst. Die auf den Rohscherben gesprühte Hydrophobierungsschicht wirkt wasserabstossend und verhindert somit, dass das mit dem aufgelegten Dekorbild mitgeführte Wasser von dem Tonscherben aufgesogen werden kann, der dann an den mit dem Wasser befeuchteten Stellen sofort aufquellen würde. Abgesehen davon, dass diese gequollenen Stellen im Rohscherben beim Schrumpfen während des Glüh- bzw. Biskuitbrandes unschöne Narben in der Scherbenoberfläche hinterlassen, führen sie auch zu einem Abheben oder Abplatzen des aufgelegten Bildes infolge der auftretenden mechanischen Spannungen. Das Dekorbild benötigt zum Anhaften an der mit der Hydrophobierungsschicht besprühten grünen Ware ein Klebemittel, da der durch das Dekorbild übertragene Gummischleim des Trägerpapieres unmittelbar nach dem Aufbringen durch die grosse Porösität des Scherbens aufgesogen wird. Eine zusätzliche Haftung erfährt das Dekorbild dadurch, dass die reversibel lösliche Lackmaske des Dekorbildes durch das verdunstende Lösungsmittel angelöst wird und durch Penetrieren in die Poren sich innig mit dem Rohscherben verbindet. Diese Verbindung ist so ausgeprägt, dass sich das Bild beim anschliessenden Glüh- bzw. Biskuitbrand nicht mehr von dem Scherben löst.

Als Lösungsmittel haben sich aromatische, nicht wasserlösliche Kohlenwasserstoffe, Aliphate bzw. Terpenkohlenwasserstoffe bewährt. Als Silikonverbindung wird Silikonöl bevorzugt. Das Klebemittel besteht bevorzugt aus dem obengenannten Lösungsmittel, das mit Wasser versetzt ist und dem zur Verdickung geringe Anteile an Methylcellulose oder Hydroxyethylcellulose zugesetzt sind. Das auf dem Klebemittel aufliegende Dekorbild kann in seiner Lage zum zu dekorierenden Scherben beliebig verändert werden, bevor es beim Ausrakeln des überschüssigen Klebemittels fest auf den Scherben gedrückt wird und seine Lackmaske — wie oben beschrieben — von dem Lösungsmittel aus der Hydrophobierungsschicht angelöst wird. Beim anschliessenden Glüh- bzw. Biskuitbrand verdampfen bzw. verbrennen die überschüssigen Bestandteile aus dem Klebemittel und der Hydrophobierungsschicht, ohne das Bild dabei abzulösen oder gar zu zerstören.

*Beispiel 1*

Eine geeignete Mischung zur Herstellung der Hydrophobierungsschicht wird aus 95 Vol.-% Trimethylbenzol, einem aromatischen, nicht wasserlöslichen Kohlenwasserstoff, und 5 Vol.-% eines Silikonöls durch inniges Verrühren bei Zimmertemperatur hergestellt. Die Mischung kann mittels einer Spritzpistole auf den Rohscherben aufgesprüht werden.

*Beispiel 2*

Eine andere Mischung für die Hydrophobierungsschicht wird aus 95 Vol.-% Terpenkohlenwasserstoff und 5 Vol.-% eines Silikonöls durch inniges Verrühren bei Zimmertemperatur hergestellt. Auch diese Mischung kann mittels einer Spritzpistole auf den Rohscherben aufgesprüht oder mittels eines Pinsels aufgetragen werden.

*Beispiel 3*

Ein bevorzugtes Klebemittel wird aus 1 Vol.-% einer Methylcellulose, 39 Vol.-% Trimethylbenzol, einem aromatischen, nicht wasserlöslichen Kohlenwasserstoff, 1 Vol.-% Nonylphenolethoxylat oder Fettalkoholethoxylat, einem Emulgator, und 59 Vol.-% Wasser durch inniges Verrühren bei Raumtemperatur hergestellt. Das Klebemittel kann auf die Hydrophobierungsschicht aufgespritzt oder mit dem Pinsel aufgetragen werden.

*Beispiel 4*

Ein weiteres Klebemittel wird aus einer Mischung von 1 Vol.-% einer Hydroxyethylcellulose, 40 Vol.-% Diacetonalkohol und 59 Vol.-% Wasser durch inniges Verrühren bei Raumtemperatur hergestellt. Auch dieses Klebemittel kann auf die Hydrophobierungsschicht aufgespritzt oder aufgetragen werden.

## Patentansprüche

1. Verfahren zum Dekorieren von Tonwaren mit Dekorbildern, wobei das Bild auf den luftgetrockneten Rohscherben aufgelegt wird, dadurch gekennzeichnet, dass zunächst eine Mischung aus einem wasserunlöslichen Lösungsmittel mit 1 bis 50 Vol.-%, einer Silikonverbindung als Hydrophobierungsschicht auf die zu dekorierenden Stellen des Rohscherbens gesprüht wird, das auf die noch Lösungsmittel enthaltende Hydrophobierungsschicht ein wasserlösliches Klebemittel gesprüht oder gestrichen wird, dass auf das Klebemittel das in Wasser abgezogene Dekorbild gelegt und der Klebemittelüberschuss herausgerakelt wird.

2. Verfahren nach Anspruch 1, dadurch gekennzeichnet, dass als Lösungsmittel ein wasserunlöslicher aromatischer, aliphatischer bzw. Terpenkohlenwasserstoff verwendet wird.

3. Verfahren nach Anspruch 1 oder 2, dadurch gekennzeichnet, dass als Silikonverbindung Silikonöl verwendet wird.

4. Verfahren nach einem der Ansprüche 1 bis 3, dadurch gekennzeichnet, dass als Klebemittel Methylcellulose oder Hydroxyethylcellulose, die in Wasser gelöst sind, verwendet werden.

## Claims

1. Process for decorating clay articles with decorative transfer images, the image being placed on the airdried green body, characterized in that initially a mixture of a water-insoluble solvent with 1 to 50% by volume of a silicone compound, as a layer which renders the body hydrophobic, is sprayed onto the areas of the green body which are to be decorated, that a water-soluble adhesive is sprayed or spread onto the still solvent-containing layer for rendering the body hydrophobic, that the decorative image which has been peeled off in water is placed onto the adhesive and the excess adhesive is removed by means of a doctor blade.

2. Process according to Claim 1, characterized in that the solvent used is a water-insoluble aromatic, aliphatic or terpene hydrocarbon.

3. Process according to Claim 1 or 2, characterized in that the silicone compound used is a silicone oil.

4. Process acording to one of Claims 1 to 3, characterized in that the adhesive used is methylcellulose or hydroxyethylcellulose dissolved in water.

## Revendications

1. Procédé pour la décoration d'articles en terre cuite avec des images décoratives, l'image étant appliquée sur la pièce crue séchée à l'air, caractérisé par le fait qu'en premier lieu on applique au pistolet sur les parties à décorer de la pièce crue, en tant que couche hydrofuge, un mélange d'un solvant insoluble dans l'eau et de 1 à 50% en volume d'un composé à base de silicone, en ce que l'on applique, au pistolet ou au pinceau, sur la couche hydrofuge contenant encore du solvant, un adhésif soluble dans l'eau, en ce que l'on applique sur l'adhésif le décor détaché dans de l'eau, et on élimine à la racle l'excès d'adhésif.

2. Procédé selon la revendication 1, caractérisé par le fait que l'on utilise comme solvant un hydrocarbure aliphatique, aromatique ou terpénique insoluble dans l'eau.

3. Procédé selon la revendication 1 ou 2, caractérisé par le fait que l'on utilise de l'huile de silicone en tant que composé à base de silicone.

4. Procédé selon l'une des revendications 1 à 3, caractérisé par le fait que l'on utilise en tant qu'adhésif de la méthylcellulose ou de l'hydroxyéthylcellulose qui sont dissoutes dans de l'eau.